# EUROPEAN PATENT SPECIFICATION

(11) **EP 1 966 099 B1**
(45) Date of publication and mention of the grant of the patent: **23.09.2009**
(21) Application number: 06723610.9
(22) Date of filing: 16.03.2006
(51) Int. Cl.: C03C 8/02

(54) **COMPOSITION, FRIT, ENAMEL AND CERAMIC COMPONENTS AND PROCESS TO MAKE THE SAME**
ZUSAMMENSETZUNG,FRITTE, EMAIL UND KERAMIKBAUTEILE UND HERSTELLUNGSVERFAHREN DAFÜR
COMPOSITION, FRITTE, EMAIL ET COMPOSANTS CERAMIQUES ET LEUR PROCEDE DE FABRICATION

(30) Priority: 23.11.2005 ES 200502892; 16.01.2006 ES 200600136
(43) Date of publication of application: 10.09.2008
(73) Proprietor: Colorobbia España, S.A., 12192 Villafames (Castellon) (ES)
(72) Inventor: NEBOT APARICI, Antonio, E-12192 Villafamés - Castellón (ES); SERENI, Sergio, E-12192 Villafamés - Castellón (ES); CARCELLER MARTÍNEZ, José Vicente, E-12192 Villafamés - Castellón (ES); DEGL' INNOCENTI, Andrea, E-12192 Villafamés - Castellón (ES)
(74) Representative: ABG Patentes, S.L.
(86) International application number: PCT/EP2006/002611
(87) International publication number: WO 2007/059808

(56) References cited:
- EP-A- 0 981 154
- EP-A- 1 083 155
- ES-A1- 2 125 801
- GB-A- 808 401
- PATENT ABSTRACTS OF JAPAN vol. 2000, no. 15, 6 April 2001 (2001-04-06) & JP 2000 351649 A (ASAHI GLASS CO LTD), 19 December 2000 (2000-12-19)

## Description

### FIELD OF THE INVENTION

The present invention is directed to a composition and a frit comprising a mixture of oxides, and to an enamel and to a ceramic component comprising said enamel. Further, the invention is directed to the processes for obtaining the same.

### BACKGROUND OF THE INVENTION

Frits are water insoluble and vitreous ceramic products obtained by high temperature fusion (usually, 1200-1500°C) of an initial composition comprising a raw material which provides oxides, and quick cooling by quenching with air or water.

The frits are further used for manufacturing ceramic enamels. Usually, frits are grinded and mixed with other materials and additives to form enamels. Said enamels can be suspended in water (barbotine) in order to form a mixture which is suitable for its deposit as a thin layer over a ceramic support which is then fired at high temperature in order to vitrify the enamel, to bind the enamel to the ceramic support and to confer the ceramic component the desired aesthetic and technical properties.

Opaque frits and ceramic enamels are widely used in the ceramic industry. Opacity in the ceramic components is due to the crystallisation (or devitrification) during firing of part of the vitreous frit, which itself depends on the mixture of oxides comprising the initial composition. That is, devitrification takes place within the frit and the crystals formed in the inner of the vitreous phase. After cooling, the mixture becomes rigid and the frit thus obtained has two phases, a crystalline phase and a vitreous or amorphous phase.

Vitreous ceramic is applied in essentially three fields: application of enamels over conformed glassware, application over metallic components and ceramic tiles. The group COLOROBBIA offers a wide variety of products in each of the three fields mentioned and has a long standing tradition of research and development in manufacturing vitreous products (see, for example EP0981154 "*Doping frit appropriate for de production of conductor ceramic enamel*", W00208135 *"Glass-ceramic, process for their preparation and use",* ES21190356 *"Ceramic frit able to crystallise mullite in industrial heat treatment cycles, its production and application*").

Crystallisation is usually accompanied by an increase in the opacity of the enamel layer. Taking into account the degree of opacity obtained, enamels may be classified in matt enamels, enamels with low superficial brightness and opaque enamels. Matt enamels are those with a high degree of crystallisation and large crystal size (usually greater than 3-5 microns), for example, those described in ES2125801 *"Improved ceramic enamel, process for manufacturing and uses",* or ES2019561 *"Process for manufacturing opaque enamels from opaque frits".*

However, opaque enamels, which are those which usually provide an acceptable brightness, have a minor degree of crystallization and their crystal size is smaller. It is well known that the degree of refraction of an incident beam of light depends on the nature of the material. As mentioned above, opaque enamels comprise two different phases: a vitreous phase and the crystal phase formed during firing. The difference between the diffraction indexes of both phases is responsible of opacity.

In view of the above, the capacity of vitreous materials to from crystals within their vitreous phase (devitrification) has been extensively studied in the ceramic and other fields.

Different combinations of raw materials providing oxides have been used in order to obtain frits giving raise to the desired opacity. Arsenic-antimony or fluorine oxides where first used, but have been discarded over the years due to their toxicity and the long productive cycles required. In the 1960's the ceramic industry started to use ZrO₂, which in combination with silicium, provides very stable siliceous zirconium crystals, and improves opacity. These have been up to the date the main products commercialized. Even recently, there are numerous reviews and studies on the devitrification of ZrO₂ based enamels. For example, Moreno A. et al "Opacity study of zirconium based glass-ceramics in manufacturing tiles through single firing", paper disclosed in the congress Qualicer-94, Escardino A. et al "study of crystalline phase formation in zirconium based white glass-ceramics", paper disclosed in the congress Qualicer-96, Ort M.J. et al "Study of devitrification of a zirconium based frit through RX diffraction at high temperature", paper disclosed in the congress Qualicer 98, Romero M, Rincon J.M. et al "Crystallisatión of zirconium-based glazes for ceramic tile coatings", Journal of the european ceramic society vol 23-issue 10, 1629-1635 September 2003.

However, ZrO₂ has a number of disadvantages such as the presence of traces of radioactive elements due to impurities of the raw material, as well as the high cost of zirconate raw materials.

A different line of investigation has been directed to frits comprising ZnO-Al₂O₃ systems with gahnite crystals as the main crystalline phase. See for example Escardino et al "Gahnite devitrification in ceramic frit: mechanism and process kinetics", Journal American Ceramic Society 82(12) 2938-2944 2000. However, no commercial products can be found due to the high costs involved in their manufacture.

Also, a large amount of research has been directed to frits designed for long firing cycles which require ZnO in order to obtain enamels with reasonable opacity, brightness and whiteness. For example, "Effect of the combination of calcium and magnesium oxides on properties and opacification of titanium-containing glaze coatings", Uzbekskii Khimicheskii Zhurnal, Irkakhodzhaeva, A. P.; et al, 1986, 5, 19-21 describes a frit composition SiO₂ 62.2-69.4, Al₂O₃ 4.0-4.5, B₂O₃ 3.0-3.3, CaO 6.0, MgO 1.0-10.0, ZnO 1.2-1.3, K₂O 1.5-1.6, Na₂O 5.2-5.8, and TiO₂ 7.0 mol%. Being designed for long firing cycles, the frit comprises high amounts of Na₂O. Also ZnO and B₂O₃ are required. The composition of the frit needed to obtain the same enamel usually changes depending on whether it is fired following a long cycle or a short cycle.

Finally, another type of opaque enamels is based on TiO₂, which themselves may be classified in two different groups. The first group is referred to frits comprising TiO₂ which crystallizes in the form of anatase. Said enamels are fired at low temperatures (800-900 °C) and are usually employed for enamelling metallic supports. The second type of TiO₂ based enamels are those in which TiO₂ is used within the vitreous phase as nucleating agent of other crystalline species. Among the glass-ceramic most frequently manufactured by this method are those comprising high amounts of MgO, ZnO, BaO and/or SrO. As mentioned above, the enamels which provide an acceptable brightness are those which show lesser degree of crystallization and their crystals size is smaller; TiO₂ has the effect of increasing the number of crystals formed during the firing-cooling cycle and reduces the speed of growth of the crystals. For example, see Babieri L. "Effect of titanium addition on the properties of complex aluminosilicate glasses and glass-ceramic", Materials research bulletin vol 32, Issue 6, 637-348, June 1997. Among said TiO₂ based frits, those based on Barium or Strontium plumbic frits have been specially important in the field of semi-conductors.

As mentioned above, all frits described in the art require the presence of different components such as ZnO, BaO and/or ZrO₂, to modify fusibility of the frit. These components show a number of disadvantages such a high costs and toxicity of some of the components. ZnO, which has been used as fusing component in the art, is expensive, further, it has a volatile price and the ceramic components comprising the same are manufactured with an important risk associated to their real cost. ZrO₂ may contain traces of radioactive elements. Further, ZnO is ecotoxic and BaO is toxic, both probably being banned in the future.

In view of the above there is a long standing need of providing a frit having a more economic formulation and capable of providing enamels with at least equivalent properties of opacity, brightness and whiteness with respect to the enamels known in the art and which do not require or require very low amounts of ZnO, BaO and ZrO₂.

### SUMMARY OF THE INVENTION

It has now been surprisingly found that in manufacturing ceramic components, an adequate mixture of oxides, which does not need the presence of ZnO, BaO and ZrO₂ in the composition for preparing frits (in the following referred to as "initial composition of the invention" or "initial composition") makes possible the preparation of enamels comprising mixed crystals of CaO, TiO₂ and SiO₂ showing high opacity, brightness, and whiteness. Additionally, it has also been found that the adequate mixture of oxides referred above must contain, if any, only very low amounts of B₂O₃, PbO, SrO and Li₂O. The enamels of the invention fall within the standards in the art. Moreover, the ceramic products comprising the enamels of the invention can be obtained by fast firing monocycles, having a length of less than 60 minutes. As described above, the process involved in manufacturing ceramic components comprises the transformation of a mixture of raw material providing oxides (initial composition) into a frit, which itself is a component of the enamel which coats a ceramic support, which after firing forms the desired ceramic component. According to the present invention, the ceramic component obtained has a high opacity, brightness and whiteness due to the mixed crystals of CaO, TiO₂ and SiO₂ present in the enamel and, further, the materials used are cost-effective.

Therefore, according to a first aspect, the present invention is directed to a composition of raw material (initial composition of the invention) which, after melting, provides a mixture comprising:
- between 2 and 7 % w/w of Na₂O+K₂O, wherein the amount of K₂O is at least double the amount of Na₂O measured by weight;
- between 10 and 22 % w/w of MgO+CaO;
- between 4 and 12 % w/w of Al₂O₃;
- between 50 and 65 % w/w of SiO₂; and
- between 4 and 10 % w/w of TiO₂;
   **characterized in that** it comprises
- less than 5% w/w of ZrO₂;
- less than 8% w/w of B₂O₃;
- less than 3% w/w of ZnO;
- less than 2% w/w of BaO;
- less than 2% w/w of PbO;
- less than 2% w/w of SrO; and
- less than 1 % w/w of Li₂O.

According to a second aspect, the present invention is directed to a process for manufacturing a frit, comprising the following steps:
a) mixing an initial composition according to the present invention;
b) melting the resulting mixture of step a); and
c) quickly cooling the resulting frit of step b).

According to a third aspect, the present invention is directed to a frit comprising
- between 2 and 7 % w/w of Na₂O+K₂O, wherein the amount of K₂O is at least double the amount of Na₂O measured by weight;
- between 10 and 22 % w/w of MgO+CaO;
- between 4 and 12 % w/w of Al₂O₃;
- between 50 and 65 % w/w of SiO₂; and
- between 4 and 10 % w/w of TiO₂;
   **characterized in that** it comprises
- less than 5% w/w of ZrO₂;
- less than 8% w/w of B₂O₃;
- less than 3% w/w of ZnO;
- less than 2% w/w of BaO;
- less than 2% w/w of PbO;
- less than 2% w/w of SrO; and
- less than 1% w/w of Li₂O.

According to a further aspect, the present invention is directed to an enamel comprising at least one frit as described above.

The frits of the invention are also starting materials for ceramic pastes which are the raw materials mixtures from which porcelain ceramics and vitroceramics are obtained. Therefore, according to a further aspect, the present invention is directed to a ceramic paste which comprises
- at least one frit according to the present invention, and, optionally, other frits; and
- at least one silicon-aluminium based inorganic substances with plastifying properties as, for instance, kaolin, clays, quartz, nepheline, etc.; and/or one or more substances which facilitate lamination, extrusion or straining processes as, for instance, carboxy-methyl cellulose, phosphates, sodium chloride, etc.

According to a further aspect, the present invention is directed to a process for manufacturing the above mentioned enamel, comprising the steps of forming with the frit as described above, a suspension, a dry powder, a granulate, vitreous flakes or a paste in water or any other suitable vehicle.

According to a further aspect, the present invention is directed to a ceramic component obtainable by a process comprising the steps of
a) totally or partially coating a ceramic support with the enamel according to the present invention;
b) firing the coated ceramic support obtained in the previous step under the conditions necessary to form a mixed CaO, TiO₂ and SiO₂ crystal.

As mentioned above, the correct mixture of oxides in the frit provides the ceramic element with an increased opacity, brightness and colour reducing or even eliminating the need for different components such as ZnO, BaO, ZrO₂ or other toxic or expensive components.

Therefore, according to a further aspect, the present invention is directed to the use of an initial composition according to the present invention for manufacturing a ceramic component, preferably, a ceramic component which is essentially white.

According to a further aspect, the present invention is directed to the use of an initial composition according to the present invention for manufacturing a frit.

According to a further aspect, the present invention is directed to the use of said frit for manufacturing an enamel.

According to a further aspect, the present invention is directed to the use of an initial composition according to the present invention for manufacturing a ceramic paste.

According to a further aspect, the present invention is directed to the use of said enamel for manufacturing a ceramic component, said enamel being according to an embodiment of the invention essentially white.

According to a further aspect, the present invention is directed to the use of the initial composition of the invention for manufacturing a ceramic component according to the present invention. The present invention is also directed to a process for manufacturing a ceramic component comprising the steps of
a) mixing an initial composition according to the present invention;
b) melting the resulting mixture;
c) quickly cooling the resulting frit;
d) forming with the frit obtained in the previous step a suspension, a dry powder, a granulate, vitreous flakes or a paste in water or any other suitable vehicle;
e) totally or partially coating a ceramic support with the enamel obtained in the previous step or with an enamel according to the present invention; and
f) firing the coated ceramic support obtained in the previous step under the conditions necessary to form a mixed CaO, TiO₂ and SiO₂ crystals, preferably mixed CaO, TiO₂ and SiO₂ crystals of formula I

   (CaO)ₓ(TiO₂)_{y}(SiO₂)_{z} formula I
wherein x, y and z are comprised between 0.5 and 1.5, preferably between 0.8 and 1.2, and more preferably wherein x = y = z= 1.

In the process for manufacturing the frits from the initial compositions, dehydration, decarboxylation, vitreous phase formation or analogous process take place. These processes are usually due to loss of crystal bound water or carbon material that burns away. Therefore, the proportion between the different oxides of the initial composition of the invention is also found in the enamel which forms part of the ceramic component.

In the context of the present invention, it is understood by ceramic support an object made of ceramic paste and devoid of enamel. Further, by raw material it is understood any product which is capable of providing an oxide by melting as, for instance, carbonates (sodium, potassium, magnesium or calcium), silicates (sodium, potassium, magnesium, calcium or aluminum), borates (sodium, potassium, magnesium or calcium), metallic oxides or mixtures thereof. Further, by ceramic component it is understood a fired ceramic support which had been previously coated with enamel.

Throughout the text of the patent, the compositions of the frits are expressed on their oxide basis. Further, "% w/w" makes reference to the weight percentage of a particular component with respect to the total weight of the composition, frit or enamel (Weight of component A x 100/(total weight of all components).

In the context of the present invention it is understood by "essentially white" a coloured enamel, whether of not is part of a ceramic component, wherein L is comprised between 80 and 99, a* is comprised between -1.5 and +1.5 and b* is comprised between -3 and +5. Parameters L, a* and b* are chromatic coordinates of the CIE system, wherein L is the luminance parameter and a* and b* are the colour coordinates.

In the context of the present invention it is understood by "trace amounts" of a compound, amounts of said compound below 0.5% w/w. Said trace mounts have a low or even unobservable effect of the properties of the resulting mixture. Further, when said compounds are present in trace amounts, it can be considered by the skilled person that said compounds are not present at all in the composition.

In the context of the present invention it is understood by "impurity" a compound which is present in the mixture as a result of the contamination of the starting materials or of any of the intermediate products. Usually, the amounts of said compounds is below 0.5% w/w and have a low or even unobservable effect of the properties of the resulting mixture.

### DESCRIPTION OF THE DRAWING

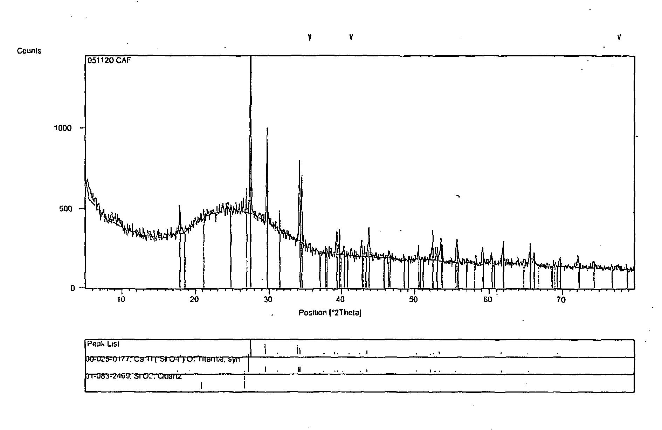

Figure 1 represents the X-ray diffraction spectrum of an enamelled and fired ceramic support. The measuring was performed at a scanning speed of 0.02 (2Φ/s) with an initial angle of 5° (2Φ) and an ending angle of 80° (2Φ). The main phase is formed by CaO-TiO₂-SiO₂, and as minority phase quartz.

### DETAILED DESCRIPTION OF THE INVENTION

According to a first aspect, the present invention is directed to a composition of raw material (initial composition of the invention) which, after melting, provides a mixture comprising:
- between 2 and 7 % w/w of Na₂O+K₂O, wherein the amount of K₂O is at least double the amount of Na₂O measured by weight;
- between 10 and 22 % w/w of MgO+CaO;
- between 4 and 12 % w/w of Al₂O₃;
- between 50 and 65 % w/w of SiO₂; and
- between 4 and 10 % w/w of TiO₂;
   **characterized in that** it comprises
- less than 5% w/w of ZrO₂;
- less than 8% w/w of B₂O₃;
- less than 3% w/w of ZnO;
- less than 2% w/w of BaO;
- less than 2% w/w of PbO;
- less than 2% w/w of SrO; and
- less than 1% w/w of Li₂O.

According to a preferred embodiment, the initial composition provides, after melting, a mixture comprising:
- between 3 and 6 % w/w of Na₂O+K₂O, wherein the amount of K₂O is at least double the amount of Na₂O measured by weight;
- between 13 and 21 % w/w of MgO+CaO;
- between 5 and 9 % w/w of Al₂O₃;
- between 54 and 62 % w/w of SiO₂; and
- between 4 and 7 % w/w of TiO₂;
   **characterized in that** it comprises
- less than 5% w/w of ZrO₂;
- less than 8% w/w of B₂O₃;
- less than 3% w/w of ZnO;
- less than 2% w/w of BaO;
- less than 2% w/w of PbO;
- less than 2% w/w of SrO; and
- less than 1 % w/w of Li₂O.

According to a preferred embodiment, the initial composition comprises
- less than 4% w/w of ZrO₂;
- less than 6% w/w of B₂O₃;
- less than 2% w/w of ZnO;
- less than 1.5% w/w of BaO;
- less than 1.5% w/w of PbO;
- less than 1.5% w/w of SrO; and
- less than 0.5% w/w of Li₂O.

According to a further preferred embodiment the initial composition comprises
- less than 3% w/w of ZrO₂;
- less than 5% w/w of B₂O₃;
- less than 2% w/w of ZnO;
- less than 1 % w/w of BaO;
- less than 1 % w/w of PbO;
- less than 1 % w/w of SrO; and
- less than 0.5% w/w of Li₂O.

According to a further preferred embodiment, the amount of ZnO is less than 2% w/w, the amount of SrO is less than 1% w/w, the amount of BaO is less than 1%w/w, the amount of ZrO₂ is less than 3% w/w and/or the amount of B₂O₃ is less than 1 %.

According to a further preferred embodiment, the amount of K₂O in the initial composition is at least triple the amount of Na₂O measured by weight.

According to a further preferred embodiment, the amount of CaO in the initial composition is at least double the amount of MgO measured by weight, preferably at least triple.

According to a further preferred embodiment, ZnO, BaO and/or ZrO₂ are present in the initial composition as an impurity, are present in trace amounts or are 0% w/w.

The initial compositions of the invention described above will finally give raise to the ceramic component with at least equal (or even increased) opacity, brightness and colour properties as those described in the state of the art. Said compositions do not need the presence of the components ZnO, BaO and ZrO₂, and contain, if any, only very low amounts of B₂O₃ (less than 8% w/w), PbO (less than 2% w/w), SrO (less than 2% w/w) and Li₂O (less than 1% w/w). In order to manufacture said ceramic component, the initial composition must be first transformed into a frit. As mentioned above, the frit obtained has a similar composition to that of the initial composition.

Therefore, a further aspect of the present invention is a frit comprising
- between 2 and 7 % w/w of Na₂O+K₂O, wherein the amount of K₂O is at least double the amount of Na₂O measured by weight;
- between 10 and 22 % w/w of MgO+CaO;
- between 4 and 12 % w/w of Al₂O₃;
- between 50 and 65 % w/w of SiO₂; and
- between 4 and 10 % w/w of TiO₂;
   **characterized in that** it comprises
- less than 5% w/w of ZrO₂;
- less than 8% w/w of B₂O₃;
- less than 3% w/w of ZnO;
- less than 2% w/w of BaO;
- less than 2% w/w of PbO;
- less than 2% w/w of SrO; and
- less than 1 % w/w of Li₂O.

According to a preferred embodiment, the frit comprises
- between 3 and 6 % w/w of Na₂O+K₂O, wherein the amount of K₂O is at least double the amount of Na₂O measured by weight;
- between 13 and 21 % w/w of MgO+CaO;
- between 5 and 9 % w/w of Al₂O₃;
- between 54 and 62 % w/w of SiO₂; and
- between 4 and 7 % w/w of TiO₂;
   **characterized in that** it comprises
- less than 5% w/w of ZrO₂;
- less than 8% w/w of B₂O₃;
- less than 3% w/w of ZnO;
- less than 2% w/w of BaO;
- less than 2% w/w of PbO;
- less than 2% w/w of SrO; and
- less than 1 % w/w of Li₂O.

According to a preferred embodiment, the frit comprises
- less than 4% w/w of ZrO₂;
- less than 6% w/w of B₂O₃;
- less than 2% w/w of ZnO;
- less than 1.5% w/w of BaO;
- less than 1.5% w/w of PbO;
- less than 1.5% w/w of SrO; and
- less than 0.5% w/w of Li₂O,

According to another embodiment, the frit comprises
- less than 3% w/w of ZrO₂;
- less than 5% w/w of B₂O₃;
- less than 2% w/w of ZnO;
- less than 1% w/w of BaO;
- less than 1 % w/w of PbO;
- less than 1 % w/w of SrO; and
- less than 0.5% w/w of Li₂O.

According to a further preferred embodiment, the amount of ZnO is less than 2% w/w, the amount of SrO is less than 1% w/w, the amount of BaO is less than 1%w/w, the amount of ZrO₂ is less than 3% w/w and/or the amount of B₂O₃ is less than 1 %.

According to a further preferred embodiment, the amount of K₂O in the frit is at least triple the amount of Na₂O measured by weight.

According to a further preferred embodiment, the amount of CaO in the frit is at least double the amount of MgO measured by weight, preferably at least triple.

Therefore, the present invention provides a frit which significantly reduces the amount of or even eliminates completely the oxides ZnO, BaO and ZrO₂, and contain, if any, only very low amounts of B₂O₃ (less than 8% w/w), PbO (less than 2% w/w), SrO (less than 2% w/w) and Li₂O (less than 1% w/w), providing at the same time enamels which have comparable properties to those known in the art. As a result, a more economic ceramic product is obtained with properties comparable to those known in the art.

The inventors have discovered that there are a number of oxides which can be present in small amounts in the initial composition without modifying the aesthetic or physicochemical properties of the final product. Thus, ZnO, BaO and ZrO₂, as well as B₂O₃, PbO, SrO and Li₂O may be added in small amounts without significantly modifying the properties of the ceramic composition, only making the final ceramic product more expensive. According to a preferred embodiment, ZnO, BaO and/or ZrO₂ are present in the frit as an impurity, are present in trace amounts or are 0% w/w.

The frit obtained may be further used to manufacture the enamel which coats a ceramic support to form the ceramic component according to the present invention. Therefore it is important that the formulation of the initial composition provides an enamel with the properties which best fit the characteristics of the ceramic support. Key matters which should be considered are:
- The balance between melting and refractive oxides so as to best fit the manufacturing conditions to be used in each specific case. In firing a ceramic component, processes involving a single firing cycle require adjustments in the formulation of the initial composition with respect to processes involving two or more firing cycles. Also, the firing temperature may require adjustments in the formulation of the initial composition.
- The balance between alkaline oxides (Na₂O, K₂O) and SiO₂ in order to control the dilation or expansion coefficient. Also, special care has to be taken in the amount of MgO and TiO₂. Low amounts of MgO and TiO₂ in the initial composition favour the formation of the diopside crystal phase, which significantly increases the expansion coefficient.
- The balance between CaO and Al₂O₃ has a marked influence in the brightness of the enamel manufactured with the frit.
- If B₂O₃ is present in the frit, high concentrations decrease the working intervals of the initial composition and must, therefore, be avoided.

A further aspect of the present invention is also a process for manufacturing the frit, comprising the following steps:
a) mixing an initial composition according to the present invention;
b) melting the resulting mixture of step a); and
c) quickly cooling the resulting frit of step b).

According to a preferred embodiment, the mixture is melted during step b) to a temperature comprised between 800 °C and 1800 °C, for 10 to 200 minutes, preferably between 1200 and 1800°C. According to a further embodiment the mixture is quickly cooled, according to step c), over water or air or by any other usual method in the art. P. Escribano et al. discloses in pages 25-29 of Esmaltes y Pigmentos I, Ed. Faenza Editrice different processes for preparing frits.

According to a further aspect, the present invention is directed to a ceramic paste which comprises
- at least one frit according to the present invention, and, optionally, other frits; and
- at least one silicon-aluminium based inorganic substances with plastifying properties as, for instance, kaolin, clay, quartz, nepheline, etc.; and/or one or more substances which facilitate lamination, extrusion or straining processes as, for instance, carboxy-methyl cellulose, phosphates, sodium chloride, etc.
R. Galindo discloses in *Pastas y Vidriados en la fabricación de pavimentos y revestimientos cerámicos*, Ed. Faenza Editrice details of the preparation of ceramic pastes.

A further aspect of the present invention is an enamel comprising at least one frit according to the present invention. According to a preferred embodiment the enamel may further comprise at least one clay, at least one additive and/or at least one ceramic modifier. Typical enamel formulations comprise
- between 60 and 95 % w/w of at least one frit according to the present invention;
- between 5 and 30 % w/w of kaolin, clays or mixtures of both;
- between 0 and 35 % w/w of ceramic modifiers,
- between 0 and 1 % w/w of additives.

Typical ceramic modifiers are known to the skilled person. Some examples are quartz, alumina, wollastonite, felspar, nepheline, zirconium silicate, anatase, calcium carbonate (limestone), dolomite. The ceramic modifiers are usually added in order to control the rheology of the enamel, stabilize the opacity of the enamel or to regulate the fusibility and brightness of the enamel. For example, ceramic modifiers which stabilize the opacity of the enamel and regulate the fusibility and brightness of the enamel are, for instance, micronized zirconium silicate, wollastonite, quartz. Said modifiers can be present in the enamel formulations in an amount between 0 to 5% (w/w) of each modifier, preferably between 0.5 and 2% of each modifier.

Also, additives which modify the rheologic properties of the enamel are known in the art, for example, carboxymethyl cellulose, phosphates, sodium chloride, preservatives, etc. More details may be found in chapter 3 of R. Galindo discloses in Pastas y Vidriados en la fabricación de pavimentos y revestimientos cerámicos, Ed. Faenza Editrice.

According to a preferred embodiment, the enamel can be in the form of a dry powder, a granulate, vitreous flakes or a suspension in water (barbotine) or in any other suitable vehicle.

According to a preferred embodiment, the enamel is essentially white after firing.

According to a further aspect, the present invention is directed to a process for manufacturing an enamel according to the present invention, comprising the step of forming with the frit according to the present invention, a suspension, a dry powder, a granulate, vitreous flakes or a paste in water or any other suitable vehicle.

According to a preferred embodiment, the process may further comprise the addition of one or more compounds selected from additives, clays, kaolin, or ceramic modifiers.

According to a further aspect, the present invention is directed to a ceramic component obtainable by a process comprising the steps of
a) totally or partially coating a ceramic support with an enamel according to any the present invention;
b) firing the coated ceramic support obtained in the previous step under the conditions necessary to form a mixed CaO, TiO₂ and SiO₂ crystal.

Typical firing conditions (step b)) involve temperatures comprised between 800 °C and 1400 °C, for 25 to 125 minutes, preferably temperatures comprised between 1000 and 1250°C, for 25 to 60 minutes.

According to a preferred embodiment, the mixed CaO, TiO₂ and SiO₂ crystals have the following formula I

(CaO)ₓ(TiO₂)_{y}(SiO₂)_{z} formula I

wherein x, y and z are comprised between 0.5 and 1.5, preferably between 0.8 and 1.2; more preferably wherein x = y = z = 1. The mixed CaO, TiO₂ and SiO₂ crystals are responsible for the increased opacity of the ceramic components according to the present invention.

According to a preferred embodiment, the enamel coating the ceramic component is essentially white after firing.

According to a further aspect, the present invention is directed to the use of an initial composition according to the present invention for manufacturing a ceramic component which comprises a ceramic support and a enamel which after heating and cooling comprises mixed CaO, TiO₂ and SiO₂ crystals, preferably CaO, TiO₂ and SiO₂ crystals of formula I

(CaO)ₓ(TiO₂)_{y}(SiO₂)_{z} formula I

wherein x, y and z are comprised between 0.5 and 1.5, preferably between 0.8 and 1.2; more preferably wherein x = y = z = 1.

According to a further aspect, the present invention is also directed to a process for manufacturing a ceramic component comprising the steps of
a) mixing a composition according to the present invention;
b) melting the resulting mixture;
c) quickly cooling the resulting frit;
d) forming with the frit obtained in the previous step a suspension, a dry powder, a granulate, vitreous flakes or a paste in water or any other suitable vehicle;
e) totally or partially coating a ceramic support with the enamel obtained in the previous step or with an enamel as described above; and
f) firing the coated ceramic support obtained in the previous step under the conditions necessary to form a mixed CaO, TiO₂ and SiO₂ crystals, preferably mixed CaO, TiO₂ and SiO₂ crystals of formula I

   (CaO)ₓ(TiO₂)_{y}(SiO₂)_{z} formula I
wherein x, y and z are comprised between 0.5 and 1.5, preferably between 0.8 and 1.2, and more preferably wherein x = y = z= 1.

### EXAMPLES

### Example 1

A composition which, after being fused at 1500°C for 1 hour, provided a frit comprising the following composition

| **OXIDE** | **% w/w** |
|---|---|
| Na₂O+K₂O | 6 |
| MgO+CaO | 19 |
| B₂O₃ | 4 |
| Al₂O₃ | 8 |
| SiO₂ | 56.5 |
| TiO₂ | 6.5 |
| TOTAL: | 100 |

wherein the relation Na₂O:K₂O (%w/w) and the relation MgO:CaO (%w/w) was less than 0.5 in both cases, was subjected to sudden cooling under water and a first crashing. The frit was grinded and mixed with kaolin to form the following mixture:

| **PRODUCT** | **% w/w** |
|---|---|
| Frit | 90 |
| Kaolin | 10 |

Grinding was done using discontinuous mills coated with Alubit 90 ® (syntherized alumina) being the grinding medium of the same material. Grinding was done under aqueous conditions (32% water), and the usual rheologic materials: 0.2% sodium carboxymethyl.cellulose, 0.15 % sodium tripoliphosphate, 0.05 % NaCl and 0.02 % preservative bactericide BT-745 were added in order to obtain a barbotine.

The curtain method was used for the superficial application of the enamel as barbotine over the ceramic support, which where previously coated (engobed). The coating obtained using this method had between 0.05 and 0.20 g/cm². The ceramic component was fired at 1145°C for 42 minutes. The colour of the resulting enamel coating the ceramic components was determined using a MINOLTA CR-2000 colorimeter with the following average results:

| **COLORIMETRY CERAMIC COMPONENT** | | | |
|---|---|---|---|
| **PRODUCT** | **L** | **A*** | **b*** |
| **GRES RED PASTE** | 94.3 | -0.11 | 0.69 |

wherein parameters L, a* and b* are chromatic coordinates of the CIE system

Typical colorimetric ranges for enamels known in the art are those wherein L is comprised between 88 and 97, a* is comprised between -1 and +1 and b* is comprised between -2 and +4. Therefore, the results shown in the previous table show that the product obtained in the example was equivalent to conventional enamels with regard to opacity and colour. The skilled person is aware of the fact that some variations (between 1 and 6 points) in this values may happen due to differences in the colorimeters.

Moreover, the product obtained improves the opacity of the enamel with respect to the conventional products.

An essential parameter of the ceramic enamel is the expansion coefficient of the enamel. The value obtained in this case was 64x10⁻⁷ °C⁻¹, which is perfectly acceptable. Also, the chemical resistance was analysed following the UNE-67-122 standard. No degradation by acid or basic medium was detected.

### Example 2

A composition which, after being fused at 1500°C for 1 hour, provided a frit comprising the following composition

| **OXIDE** | **% w/w** |
|---|---|
| Na₂O+K₂O | 6 |
| MgO+CaO 19 | |
| B₂O₃ | 4 |
| Al₂O₃ | 8 |
| SiO₂ | 56.5 |
| TiO₂ | 6.5 |
| TOTAL: | 100 |

wherein the relation Na₂O:K₂O (%w/w) and the relation MgO:CaO (%w/w) was less than 0.5 in both cases, was subjected to sudden cooling under water and a first crashing. The frit was grinded and mixed with kaolin and zirconium silicate to form the following mixture:

| **PRODUCT** | **% w/w** |
|---|---|
| Frit | 92 |
| Kaolin | 7 |
| Zirconium silicate M5 | 1 |

Grinding was done using discontinuous mills coated with Alubit 90 ® (syntherized alumina) being the grinding medium of the same material. Grinding was done under aqueous conditions (32% water) and the usual rheologic materials: 0.2% sodium carboxymethyl.cellulose, 0.15% sodium tripoliphosphate, 0.05% NaCl and 0.02% preservative bactericide BT-745 were added in order to obtain a barbotine.

The curtain method was used for the superficial application of the enamel as barbotine over the ceramic support, which where previously coated (engobed). The coating obtained using this method has between 0.05 and 0.20 g/cm². The ceramic component was fired at 1120°C for 40 minutes. The colour of the resulting enamel coating the ceramic components was determined using a MINOLTA CR-2000 colorimeter with the following average results:

| **COLORIMETRY CERAMIC COMPONENT** | | | |
|---|---|---|---|
| **PRODUCT** | **L** | **a*** | **b*** |
| **GRES RED PASTE** | 93.1 | -0.56 | 0.75 |

wherein parameters L, a* and b* are chromatic coordinates of the CIE system.

According to the b* values of the product obtained in the example, the product was equivalent to conventional enamels with regard to opacity and colour.

An essential parameter of the ceramic component is the expansion coefficient of the enamel. The value obtained in the present case was 62x10⁻⁷ °C⁻¹, which falls within the standard ranges. Also, the chemical resistance was analysed following the UNE-67-122 standard. No degradation by acid or basic medium was observed.

### Example 3

A composition which, after being fused at 1500°C for 1 hour, provided a frit comprising the following composition

| **OXIDE** | **% w/w** |
|---|---|
| Na₂O+K₂O | 4 |
| MgO+CaO | 18 |
| Al₂O₃ | 7 |
| SiO₂ | 64 |
| TiO₂ | 7 |
| TOTAL: | 100 |

wherein the relation Na₂O:K₂O (%w/w) and the relation MgO:CaO (%w/w) was less than 0.5 in both cases, was subjected to sudden cooling under water and a first crashing. The frit was grinded and mixed with kaolin and zirconium silicate to form the following mixture:

| **PRODUCT** | **% w/w** |
|---|---|
| Frit | 92 |
| Kaolin | 7 |
| Zirconium silicate M5 | 1 |

Grinding was done using discontinuous mills coated with Alubit 90 ® (syntherized alumina) being the grinding medium of the same material. Grinding was done under aqueous conditions (32% water) and the usual rheologic materials: 0.2% sodium carboxymethyl.cellulose, 0.15% sodium tripoliphosphate, 0.05% NaCl and 0.02% preservative bactericide BT-745 were added in order to obtain a barbotine.

The curtain method was used for the superficial application of the enamel as barbotine over the ceramic support, which where previously coated (engobed). The coating obtained using this method has between 0.05 and 0.20 g/cm². The ceramic component was fired at 1180-1200°C for 55 minutes. The colour of the resulting enamel coating the ceramic components was determined using a MINOLTA CR-2000 colorimeter with the following average results:

| **COLORIMETRY CERAMIC COMPONENT** | | | |
|---|---|---|---|
| **PRODUCT** | **L** | **a*** | **b*** |
| **GRES RED PASTE** | 94.47 | -0.58 | 1.00 |

wherein parameters L, a* and b* are chromatic coordinates of the CIE system.

According to the b* values of the product obtained in the example, the product was equivalent to conventional enamels with regard to opacity and colour.

An essential parameter of the ceramic component is the expansion coefficient of the enamel. The value obtained in the present case was 62x10⁻⁷ °C⁻¹, which falls within the standard ranges. Also, the chemical resistance was analysed following the UNE-67-122 standard. No degradation by acid or basic medium was observed.

### Example 4

A number of frits were prepared having different proportions of oxides after being fused at 1500° C for 1 hour, then quickly cooled under water and subjected to a first crashing (Table 1):

**Table 1**

| | F-6 | F-21 | F-36 | F-41 | F-42 |
|---|---|---|---|---|---|
| Na₂O+K₂O | 6 | 5 | 5 | 5 | 5 |
| MgO+CaO | 17 | 18 | 19 | 17 | 16 |
| BaO | -- | | | 1,5 | 3 |
| ZnO | 3 | 1,5 | 1 | 1,5 | 1,5 |
| B₂O₃ | 4 | 5,5 | 6 | 5 | 5 |
| Al₂O₃ | 7 | 7 | 7 | 6 | 6,5 |
| SiO₂ | 58 | 58 | 57 | 59 | 58 |
| TiO₂ | 5 | 5 | 5 | 5 | 5 |

wherein the relation Na₂O:K₂O (%w/w) and the relation MgO:CaO (%w/w) was less than 0.5 in both cases. The frit was grinded and mixed with kaolin and zirconium silicate to form the following mixture:

| **PRODUCT** | **% w/w** |
|---|---|
| Frit | 93 |
| Kaolin | 7 |

Grinding was done using discontinuous mills coated with Alubit 90 ® (syntherized alumina) being the grinding medium of the same material. Grinding was done under aqueous conditions (32% water) and the usual rheologic materials: 0.2% sodium carboxymethyl.cellulose, 0.15% sodium tripoliphosphate, 0.05% NaCl and 0.02% preservative bactericide BT-745 were added in order to obtain a barbotine.

The curtain method was used for the superficial application of the enamel as barbotine over the ceramic support, which where previously coated (engobed). The coating obtained using this method had between 0.05 and 0.20 g/cm². The ceramic component was fired at 1120°C for 40 minutes. The colour of the resulting enamel coating the ceramic components was determined using a MINOLTA CR-2000 colorimeter with the following average results (Table 2):

**Table 2**

| | F-6 | F-21 | F-36 | F-41 | F-42 |
|---|---|---|---|---|---|
| L | 94,2 | 93,66 | 93,7 | 93,9 | 93,75 |
| a* | -0,56 | -0,54 | -0,53 | -0,53 | -0,54 |
| b* | 0,75 | 0,6 | 0,69 | 0,7 | 0,72 |

wherein parameters L, a* and b* are chromatic coordinates of the CIE system.

According to the b* values of the products obtained in the example, F-6, F-21, F-36, F-41 and F-42 were comparable to those obtained in example 2 and equivalent to conventional enamels with regard to opacity and colour.

An essential parameter of the ceramic component is the expansion coefficient of the enamel. The value obtained in the present case was in all cases approximately 62x10⁻⁷ °C⁻¹, which falls within the standard ranges. Also, the chemical resistance was analysed following the UNE-67-122 standard. No degradation by acid or basic medium was observed.

## Claims

1. Composition of raw material which, after melting, provides a mixture comprising:
- between 2 and 7 % w/w of Na₂O+K₂O, wherein the amount of K₂O is at least double the amount of Na₂O measured by weight;
- between 10 and 22 % w/w of MgO+CaO;
- between 4 and 12 % w/w of Al₂O₃;
- between 50 and 65 % w/w of SiO₂; and
- between 4 and 10 % w/w of TiO₂;
**characterized in that** it comprises
- less than 5% w/w of ZrO₂;
- less than 8% w/w of B₂O₃;
- less than 3% w/w of ZnO;
- less than 2% w/w of BaO;
- less than 2% w/w of PbO;
- less than 2% w/w of SrO; and
- less than 1 % w/w of Li₂O.

2. Frit comprising
- between 2 and 7 % w/w of Na₂O+K₂O, wherein the amount of K₂O is at least double the amount of Na₂O measured by weight;
- between 10 and 22 % w/w of MgO+CaO;
- between 4 and 12 % w/w of Al₂O₃;
- between 50 and 65 % w/w of SiO₂; and
- between 4 and 10 % w/w of TiO₂;
**characterized in that** it comprises
- less than 5% w/w of ZrO₂;
- less than 8% w/w of B₂O₃;
- less than 3% w/w of ZnO;
- less than 2% w/w of BaO;
- less than 2% w/w of PbO;
- less than 2% w/w of SrO; and
- less than 1% w/w of Li₂O.

3. Frit according to claim 2, wherein the amount of ZnO is less than 2% w/w, the amount of SrO is less than 1% w/w, the amount of BaO is less than 1% w/w, the amount of ZrO₂ is less than 3% w/w and/or the amount of B₂O₃ is less than 1% w/w.

4. Frit according to any of claims 2-3, wherein the amount of K₂O is at least triple the amount of Na₂O measured by weight.

5. Frit according to any of claims 2-4, wherein the amount of CaO is at least double the amount of MgO measured by weight, preferably at least triple.

6. Frit according to any of claims 2-5, wherein ZnO, BaO and/or ZrO₂ are present as an impurity, are present in trace amounts or are 0% w/w.

7. Process for manufacturing a frit according to any of claims 2-6, comprising the following steps:
a) mixing a composition according to claim 1;
b) melting the resulting mixture of step a); and
c) quickly cooling the resulting frit of step b).

8. Enamel comprising at least one frit according to any of claims 2-6.

9. Enamel according to claim 8, comprising
- between 60 and 95 % w/w of at least one frit according to any of claims 2-6;
- between 5 and 30 % w/w of kaolin, clays or mixtures of both;
- between 0 and 35 % w/w of ceramic modifiers,
- between 0 and 1 % w/w of additives.

10. Enamel according to any of claims 8-9, which after firing is essentially white.

11. Ceramic paste, comprising
- at least one frit according to any of claims 2-6, and, optionally, other frits; and
- at least one silicon-aluminium based inorganic substance with plastifying properties, and/or one or more substances which facilitate lamination, extrusion or straining processes.

12. Process for manufacturing an enamel according to any of claims 8-10, comprising the step of forming with the frit according to any of claims 2-6, a suspension, a dry powder, a granulate, vitreous flakes or a paste in water or any other suitable vehicle.

13. Ceramic component obtained by a process comprising the steps of
a) totally or partially coating a ceramic support with an enamel according to any of claims 8-10;
b) firing the coated ceramic support obtained in the previous step under the conditions necessary to form a mixed CaO, TiO₂ and SiO₂ crystal.

14. Ceramic component according to claim 13, wherein the coated ceramic support is heated in step b) to a temperature comprised between 800 °C and 1400 °C, for 15 to 125 minutes; preferably temperatures comprised between 1000 and 1250 °C, for 25 to 60 minutes.

15. Ceramic component according to any of claims 13-14, wherein the mixed CaO, TiO₂ and SiO₂ crystals present formula I
(CaO)ₓ(TiO₂)_{y}(SiO₂)_{z} formula I
wherein x, y and z are comprised between 0.5 and 1.5, preferably between 0.8 and 1.2, more preferably wherein x = y = z= 1.

16. Ceramic component according to any of claims 13-15, wherein the enamel is essentially white.

17. Process for manufacturing a ceramic component comprising the steps of
a) manufacturing a frit according to the process of claim 7
b) forming with the frit obtained in the previous step a suspension, a dry powder, a granulate, vitreous flakes or a paste in water or any other suitable vehicle;
c) totally or partially coating a ceramic support with an enamel obtained in the previous step or with an enamel according to any of claims 8-10; and
d) firing the ceramic component obtained in the previous step to form mixed CaO, TiO₂ and SiO₂ crystals, preferably mixed CaO, TiO₂ and SiO₂ crystals of formula I
(CaO)ₓ(TiO₂)_{y}(SiO₂)_{z} formula I
wherein x, y and z are comprised between 0.5 and 1.5, preferably between 0.8 and 1.2, and more preferably wherein x = y = z= 1.

## Patentansprüche

1. Zusammensetzung eines Rohstoffs, das nach dem Schmelzen eine Mischung ergibt, die folgendes umfasst:
- zwischen 2 und 7 Gew.-% Na₂O+K₂O, wobei der Gehalt an K₂O, nach Gewicht gemessen, wenigstens das Doppelte des Gehalts an Na₂O beträgt,
- zwischen 10 und 22 Gew.-% MgO+CaO,
- zwischen 4 und 12 Gew.-% Al₂O₃,
- zwischen 50 und 65 Gew.-% SiO₂ und
- zwischen 4 und 10 Gew.-% TiO₂,
**dadurch gekennzeichnet, dass** sie
- weniger als 5 Gew.-% ZrO₂,
- weniger als 8 Gew.-% B₂O₃,
- weniger als 3 Gew.-% ZnO,
- weniger als 2 Gew.-% BaO,
- weniger als 2 Gew.-% PbO,
- weniger als 2 Gew.-% SrO und
- weniger als 1 Gew.-% Li₂O umfasst.

2. Fritte die folgendes umfasst:
- zwischen 2 und 7 Gew.-% Na₂O+K₂O, wobei der Gehalt an K₂O, nach Gewicht gemessen, wenigstens das Doppelte des Gehalts an Na₂O beträgt,
- zwischen 10 und 22 Gew.-% MgO+CaO,
- zwischen 4 und 12 Gew.-% Al₂O₃,
- zwischen 50 und 65 Gew.-% SiO₂ und
- zwischen 4 und 10 Gew.-% TiO₂,
**dadurch gekennzeichnet, dass** sie
- weniger als 5 Gew.-% ZrO₂,
- weniger als 8 Gew.-% B₂O₃,
- weniger als 3 Gew.-% ZnO,
- weniger als 2 Gew.-% BaO,
- weniger als 2 Gew.-% PbO,
- weniger als 2 Gew.-% SrO und
- weniger als 1 Gew.-% Li₂O umfasst.

3. Fritte nach Anspruch 2, bei der der Gehalt an ZnO weniger als 2 Gew.-% beträgt, der Gehalt an SrO weniger als 1 Gew.-% beträgt, der Gehalt an BaO weniger als 1 Gew.-% beträgt, der Gehalt an ZrO₂ weniger als 3 Gew.-% beträgt und/oder der Gehalt an B₂O₃ weniger als 1 Gew.-% beträgt.

4. Fritte nach einem der Ansprüche 2 bis 3, bei der der Gehalt an K₂O, nach Gewicht gemessen, wenigstens das Dreifache des Gehalts an Na₂O beträgt.

5. Fritte nach einem der Ansprüche 2 bis 4, bei der der Gehalt an CaO, nach Gewicht gemessen, wenigstens das Doppelte, vorzugsweise wenigstens das Dreifache, des Gehalts an MgO beträgt.

6. Fritte nach einem der Ansprüche 2 bis 5, bei der ZnO, BaO und/oder ZrO₂ als Verunreinigung vorliegen, in Spuren vorliegen oder 0 Gew.-% betragen.

7. Verfahren zur Herstellung einer Fritte nach einem der Ansprüche 2 bis 6, das die folgenden Schritten umfasst:
a) eine Zusammensetzung nach Anspruch 1 wird vermischt,
b) die resultierende Mischung aus Schritt a) wird geschmolzen und
c) die resultierende Fritte aus Schritt b) wird schnell abgekühlt.

8. Email das wenigstens einer Fritte nach einem der Ansprüche 2 bis 6 umfasst.

9. Email nach Anspruch 8, die folgendes umfasst:
- zwischen 60 und 95 Gew.-% wenigstens einer Fritte nach einem der Ansprüche 2 bis 6,
- zwischen 5 und 30 Gew.-% Kaolin, Tonen oder Mischungen von beiden,
- zwischen 0 und 35 Gew.-% Keramikmodifiziermittel,
- zwischen 0 und 1 Gew.-% Zusatzstoffen.

10. Email nach einem der Ansprüche 8 bis 9, das nach dem Brennen im wesentlichen weiß ist.

11. Keramikmasse umfassend
- wenigstens einer Fritte nach einem der Ansprüche 2 bis 6 und wahlweise weiteren Fritten, und
- wenigstens einem anorganischen Stoff auf Silicium-Aluminium-Basis mit weichmachenden Eigenschaften und/oder einem oder mehr Stoffen, die Laminier-, Extrudier- bzw. Ziehendervorgänge fördern.

12. Verfahren zur Herstellung eines Emails nach einem der Ansprüche 8 bis 10, das dem Schritt, bei dem mit der Fritte nach einem der Ansprüche 2 bis 6 eine Suspension, ein Trockenpulver, ein Granulat, Glasflocken oder eine Masse in Wasser oder einer anderen geeigneten Trägersubstanz gebildet wird aufweist.

13. Keramikkomponente, das durch ein Verfahren erhalten wird, das die folgenden Schritten aufweist,
a) ein Keramikträger ganz oder teilweise mit einem Email nach einem der Ansprüche 8 bis 10 beschichtet wird,
b) der im vorhergehenden Schritt erhaltene beschichtete Keramikträger unter den Bedingungen, die zur Bildung eines CaO-, TiO₂- und SiO₂-Mischkristalls erforderlich sind, gebrannt wird.

14. Keramikkomponente nach Anspruch 13, bei dem der beschichtete Keramikträger in Schritt b) 15 bis 125 Minuten lang auf eine Temperatur erhitzt wird, die zwischen 800°C und 1400°C, liegt, vorzugsweise 25 bis 60 Minuten lang auf Temperaturen, die zwischen 1000 und 1250°C liegen.

15. Keramikkomponente nach einem der Ansprüche 13 bis 14, bei dem die CaO-, TiO₂- und SiO₂-Mischkristalle die Formel I
(CaO)ₓ(TiO₂)_{y}(SiO₂)_{z} Formel I
aufweisen, wobei x, y und z zwischen 0,5 und 1,5, vorzugsweise zwischen 0,8 und 1,2 liegen, bevorzugter wobei x = y = z = 1 ist.

16. Keramikkomponente nach einem der Ansprüche 13 bis 15, bei dem das Email im wesentlichen weiß ist.

17. Verfahren zur Herstellung einer Keramikkomponente, das die folgenden Schritten aufweist,
a) eine Fritte gemäß dem Verfahren nach Anspruch 7 hergestellt wird,
b) mit der im vorhergehenden Schritt erhaltenen Fritte eine Suspension, ein Trockenpulver, ein Granulat, Glasflocken oder eine Masse in Wasser oder einer anderen geeigneten Trägersubstanz gebildet wird,
c) ein Keramikträger ganz oder teilweise mit einem im vorhergehenden Schritt erhaltenen Email oder mit einem Email nach einem der Ansprüche 8 bis 10 beschichtet wird, und
d) das im vorhergehenden Schritt erhaltene Keramikkomponente zu brennen, damit CaO-, TiO₂- und SiO₂-Mischkristallen, vorzugsweise CaO-, TiO₂- und SiO₂-Mischkristallen der Formel I
(CaO)ₓ(TiO₂)ₓ(SiO₂)_{z} Formel I
gebildet werden, wobei x, y und z zwischen 0,5 und 1,5, vorzugsweise zwischen 0,8 und 1,2 liegen, und bevorzugter wobei x = y = z = 1 ist.

## Revendications

1. Composition de matériaux bruts qui, après fusion, fournissent un mélange comprenant:
- entre 2 et 7% en poids/poids de Na₂O+K₂O, dans lequel la quantité de K₂O est au moins le double de la quantité de Na₂O calculée en poids;
- entre 10 et 22% en poids/poids de MgO+CaO;
- entre 4 et 12% en poids/poids de Al₂O₃;
- entre 50 et 65% en poids/poids de SiO₂ et
- entre 4 et 10% en poids/poids de TiO₂;
**caractérisée en ce qu'**elle comprend :
- moins de 5% en poids/poids de ZrO₂;
- moins de 8% en poids/poids de B₂O₃;
- moins de 3% en poids/poids de ZnO;
- moins de 2% en poids/poids de BaO;
- moins de 2% en poids/poids de PbO;
- moins de 2% en poids/poids de SrO; et
- moins de 1% en poids/poids de Li₂O.

2. Fritte comprenant :
- entre 2 et 7% en poids/poids de Na₂O+K₂O, dans laquelle la quantité de K₂O est au moins le double de la quantité de Na₂O calculée en poids;
- entre 10 et 22% en poids/poids de MgO+CaO;
- entre 4 et 12% en poids/poids de Al₂O₃;
- entre 50 et 65% En poids/poids de SiO₂ et
- entre 4 et 10% en poids/poids de TiO₂;
**caractérisée en ce qu'**elle comprend :
- moins de 5% en poids/poids de ZrO₂;
- moins de 8% en poids/poids de B₂O₃;
- moins de 3% en poids/poids de ZnO;
- moins de 2% en poids/poids de BaO;
- moins de 2% en poids/poids de PbO;
- moins de 2% en poids/poids de SrO; et
- moins de 1% en poids/poids de Li₂O.

3. Fritte selon la revendication 2, dans laquelle la quantité de ZnO est moins de 2% en poids/poids, la quantité de SrO est moins de 1%, la quantité de BaO est moins de 1% en poids/poids, la quantité de ZrO₂ est moins de 3% en poids/poids et/ou la quantité de B₂O₃ est moins de 1% en poids/poids.

4. Fritte selon l'une des revendications 2-3, dans laquelle la quantité de K₂O est au moins le triple de la quantité de Na₂O calculée en poids.

5. Fritte selon l'une des revendications 2-4, dans laquelle la quantité de CaO est au moins le double de la quantité de MgO calculée en poids, de préférence au moins le triple.

6. Fritte selon l'une des revendications 2-5, dans laquelle ZnO, BaO et/ou ZrO₂ sont présents comme une impureté, sont présents sous forme de traces ou sont égaux à 0% en poids/poids.

7. Procédé de fabrication d'une fritte selon l'une des revendications 2-6, comprenant les étapes suivantes:
a) le mélange d'une composition selon la revendication 1,
b) la fusion du mélange résultant de l'étape a); et
c) le refroidissement rapide de la fritte résultant de l'étape b).

8. Email comprenant au moins une fritte selon l'une des revendications 2-6.

9. Email selon la revendication 8, comprenant
- entre 60 et 95% en poids/poids d'au moins une frite selon l'une des revendications 2-6;
- entre 5 et 30% en poids/poids de kaolin, d'argile, ou les mélanges des deux;
- entre 0 et 35% en poids/poids de modificateurs de céramique ;
- entre 0 et 1% en poids/poids d'additifs.

10. Email selon l'une des revendications 8-9, qui après cuisson est essentiellement blanc.

11. Pâte de céramique, comprenant :
- au moins une fritte selon l'une des revendications 2-6, et, optionnellement, d'autres frittes; et
- au moins une substance inorganique basée sur le mélange silicium-aluminium ayant des propriétés de plastifiant, et/ou une ou plusieurs substances qui facilites les procédés de laminage, d'extrusion ou d'étirage.

12. Procédé de fabrication d'un émail selon l'une des revendications 8-10, comprenant l'étape de profilage avec la fritte selon l'une des revendications 2-6, une suspension, une poudre sèche, un granulat, des flocons vitreux ou une pâte dans l'eau ou n'importe quel autre véhicule adéquate.

13. Composé céramique obtenu par un procédé comprenant les étapes de :
a) l'enrobage total ou partiel d'un support céramique avec un émail selon l'un des revendications 8-10;
b) la cuisson du support céramique enrobé obtenu suivant l'étape précédente dans les conditions nécessaires pour former un mélange de CaO, de TiO₂ et de cristal SiO₂.

14. Composé céramique selon la revendication 13, dans lequel le support céramique enrobé est chauffé au cours de l'étape b) à une température comprise entre 800°C et 1400°C, pendant 15 à 125 minutes, de préférence une température comprise entre 1000 et 1250°C, pendant 25 à 60 minutes.

15. Composé céramique selon l'une des revendications 13-14, dans lequel le mélange de CaO, de TiO₂ et de cristal SiO2 répond à la formule I
(CaO)x(TiO2)y(SiO2)z formule I
dans laquelle x, y et z sont compris entre 0,5 et 1,5, de préférence entre 0,8 et 1,2, de préférence encore x=y=z=1.

16. Composé céramique selon l'une des revendications 13-15, dans lequel l'émail est essentiellement blanc.

17. Procédé de préparation d'un composé céramique comprenant les étapes :
a) préparation d'une fritte selon le procédé de la revendication 7;
b) profilage avec la fritte obtenue dans la mesure précédente, une suspension, une poudre sèche, un granulat, des flocons vitreux ou une pâte dans l'eau ou n'importe quel autre véhicule adéquate.
c) l'enrobage total ou partiel d'un support céramique avec un émail obtenu dans l'étape précédente ou avec un émail obtenu selon l'une des revendications 8-10; et
d) la cuisson du composé céramique obtenu dans l'étape précédente pour former le mélange de CaO, de TiO₂ et de cristal de SiO₂, de préférence un mélange de CaO, de TiO₂ et de cristal de SiO₂ de la formule I
(CaO)x(TiO₂)y(SiO₂)z
formule I dans laquelle x, y et z sont compris entre 0,5 et 1,5, de préférence entre 0,8 et 1,2, de préférence encore x=y=z=1.
